# EUROPEAN PATENT SPECIFICATION

(11) **EP 2 457 431 B1**
(45) Date of publication and mention of the grant of the patent: **28.10.2015**
(21) Application number: 11190740.8
(22) Date of filing: 25.11.2011
(51) Int. Cl.: A01D 34/66, A01B 73/04

(54) **Mower, and method for controlling mowing beams of mower**
Mäher und Verfahren zur Steuerung von Mähbalken eines Mähers
Tondeuse et procédé de contrôle de rayons de tondeuse

(30) Priority: 25.11.2010 FI 20100394
(43) Date of publication of application: 30.05.2012
(73) Proprietor: Oy El-Ho Ab, 68910 Bennäs (FI)
(72) Inventor: Löfbacka, Johan, 68930 Purmo (FI); Häggblom, Karl-Erik, 67600 Karleby (FI)
(74) Representative: Kolster Oy Ab

(56) References cited:
- EP-A1- 1 348 324
- DE-A1- 3 441 387
- DE-A1- 10 157 289
- US-A1- 2010 212 278

## Description

### Technical field

The present invention relates to a mower used within agriculture and having a large working width, as described in the preamble of claim 1. The invention further relates to a method for controlling mowing beams of a mower which are of the type described in the preamble of claim 15 central frame.

### Prior art

There are a plurality of known solutions for suspending two mowing units to a load-bearing frame.

For example, WO 92/09190 discloses a mower provided with two mowing units suspended to a load-bearing central frame, which are not, however, capable of cutting in a clean manner due to the fact that there is no overlapping of the cutting elements.

Patent DE 3441387 discloses a mower which is also provided with two mowing units suspended to a load-bearing central frame. These mowing units are mounted directly on the load-bearing frame, and thus it is not possible for them to move independently in the vertical direction for adaptation to the ground.

Italian patent ITFO960013 further presents a mower with two mowing units suspended to a load-bearing frame whose internal positioning is controlled by a ball joint between the mowing beams. A ball joint according to ITFO960013 is on the cutting plane and, hereby, it does not allow mentionable overlapping of the cutting circles of the cutting members.

EP1348324 discloses a mower provided with a large working width and having lifting booms substantially perpendicular to the driving direction between the mowing units and the load-bearing central frame. The mowing units are connected together in the working position, which also prevents the mowing units from being distanced from one another during the work and thus leaving a strip of uncut grass in the middle.

Problems in increasing the working width in a mower by connecting two mowing units in various ways so that they work side by side become apparent from several patents, whereby the above patents serve best to present the background for a mower according to the present invention. The prior art has, however, the disadvantage that either it is suitable only for machines with a moderate working width or it is suitable for use which does not set high requirements for adaptability to the ground or for cutting results. Alternatively, the construction in the known solutions is so complicated that such a machine would be both expensive to manufacture and very sensitive to malfunction and demanding in regard of maintenance.

### Presentation of the problem

None of the known solutions addresses the question of how the mower could be lifted up in a simple way for ground clearance over the swaths of already mowed crop on the headland. Along with an increase in the working width of the mower, also the importance increases of lifting up the mowing units such that the outer ends of the mower beams will have increased ground clearance. Otherwise, even a small tilt of the tractor or equipment carrier makes the outer end of the mower dive down and destroy an existing swath or even cut into the ground, which involves the risk of the mower becoming severely damaged.

The present mower has been provided to achieve simple changing from the transport position to the working position, ideal adaptability to the ground, optimal cutting result and simple lifting of the mower to a slightly V-shaped position for ground clearance over the finished swaths.

Hereby, the mower is given the characterizing features of claim 1, and a method for controlling mowing beams of a mower is given the characterizing features of claim 15. The subsequent dependent claims present appropriate further developments and variations of the invention which further improve its operation.

The primary advantage of the invention is the simplicity of connecting the inner ends of the mowing beams together in changing from the transport position to the working position, thanks to the controlling limiter between the mowing units. A second advantage is the good adaptability of the mowing beams to the ground, brought about by said limiter. Further, a good cutting result is obtained because the cutting circles in the innermost cutting elements opposite to each other can have extensive overlapping in the working position without the risk of the cutting elements colliding with each other or with their supports and transmission constructions. Further, when lifted up for ground clearance over existing swaths, the mowing units automatically assume a controlled V shape.

### Brief description of the figures

In the following, a preferred embodiment of the invention is described with the aid of the following principled drawings.
Figure 1 shows a direct front view of the mower according to the invention with the mowing units lifted up in the transport position.
Figure 2 shows a direct front view of the same mower with the mowing units in the working position.
Figure 3 shows a direct front view of the same mower with the mowing units in the working position, where the mowing beams have assumed a slightly V-shaped position in mowing along a hollow.
Figure 4 shows a direct front view of the same mower with the mowing units in the working position, where the mowing beams have assumed a slightly V-shaped position in mowing along a ridge.
Figure 5 shows a direct front view of the same mower, where the mowing beams have assumed a slightly V-shaped position when lifted up for ground clearance over crop not mowed yet or over existing swaths.
Figure 6 shows a detailed view of the controlling limiter.
Figure 7 shows a limited central section from the side of the same mower in the working position.
Figure 8 shows the controlling limiters in a position just before the mowing units assume the working position.
Figure 9 shows the controlling limiters in a position where they are centred with each other.
Figure 10 shows a partially sectioned side view of an embodiment of the mower according to the invention with a lifting frame between the load-bearing frame and the tractor or equipment carrier.

### Preferred embodiment

The above principled drawings do not show the mower in scale but only serve to illustrate structural solutions of the preferred embodiment and the operation of the embodiment. Hereby, the respective structural parts shown in the figures and denoted with reference numerals correspond to the structural solutions presented in the description below.

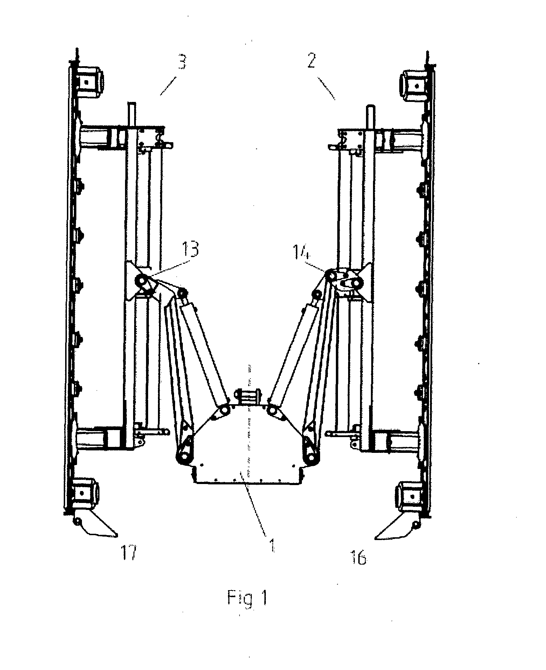

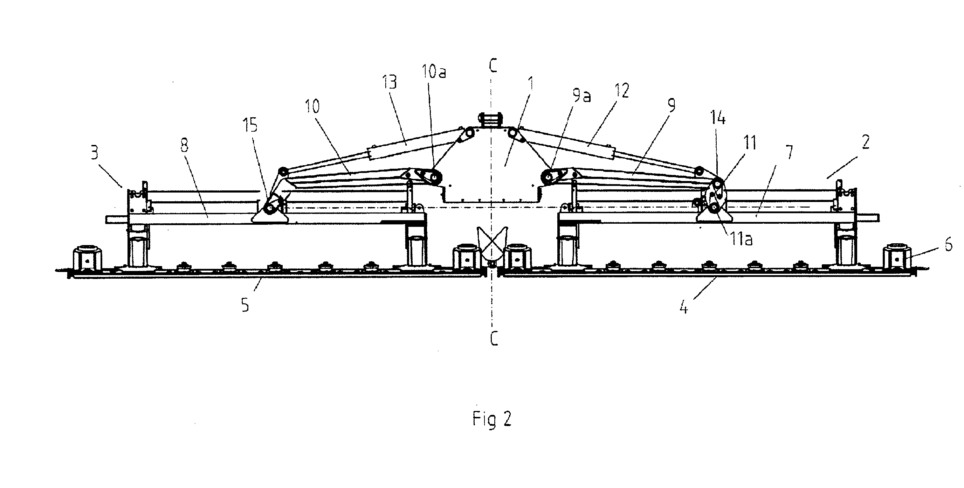

A mower in Figures 1 to 2 is formed of a load-bearing central frame 1 carried by the tractor or equipment carrier and comprises mowing units 2, 3 attached to the central frame and formed of mowing beams 4, 5 which are substantially perpendicular to the driving direction and have related cutting members 6. Each mowing unit 2, 3 has further portal frames 7, 8 attached to the load-bearing frame 1 by means of lifting booms 9 and 10. At least between the outer end of one of the lifting arms and the portal frame of the mowing unit, there is, in addition, a swivel joint 11 which is substantially vertical in the working position.

Between the load-bearing central frame 1 and the lifting booms 9, 10, there are lift cylinders 12 and 13. Between the load-bearing central frame 1 and the lifting booms 9, 10 or alternatively outer fastening swivels 14 and 15 of the lifting booms, there are, in a conventional way, springy elements for relief of load of the mowing units' own weight, which is not shown. They may preferably be combined with lift cylinders, for example by being attached to pressure accumulators in a known manner.

The central plane of the mower, perpendicular to the ground in the driving direction, is shown in a broken line C-C.

The ends of the mowing units 2, 3 facing the central plane in the working position are provided with controlling limiters 16 and 17 adapted to one another. These limiters prevent the mowing beams from getting so close to each other during work that their cutting members would collide, but in order to obtain an optimal cutting result, they allow the cutting circles of the mowing beams to intersect each other if the rotations of the cutting members are synchronized with each other.

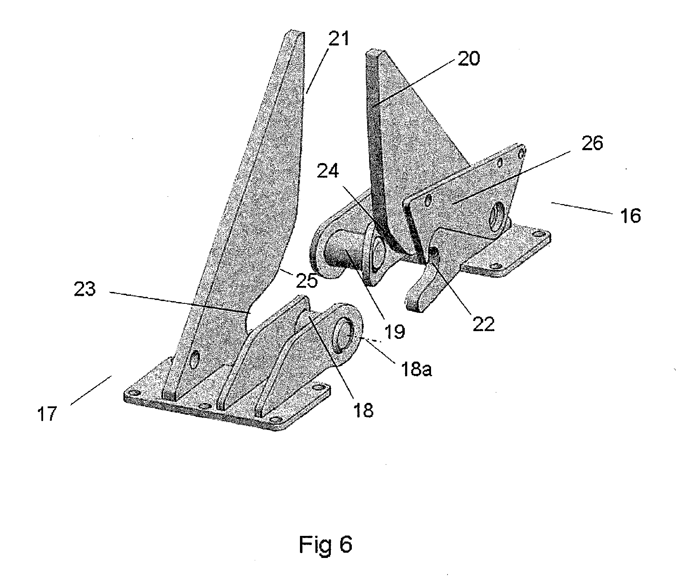

In the preferred embodiment presented, shown in Figure 6, the controlling limiters are provided with swivel shafts 18 and 19 parallel to the driving direction. In the working position, a swivel centre 18a common to them is on a substantially horizontal plane above the cutting plane of the cutting members 6 but below swivel points 11 a and 15 of the portal frames 7, 8. Each controlling limiter also has a controlling curved surface 20 and 21 turned away from the corresponding mowing unit. This controlling surface has a significant vertical extension above the cutting plane. In a preferred embodiment, its vertical projection is of the same length as the cutting radius of the cutting members 6. Each surface 20 and 21 has a significantly concave limiting area 22 and 23 with a radius that is substantially the same as that of the swivel shafts 18, 19. Further, they have a convex or nearly plane areas 24 and 25. One or both of the controlling limiters may also be provided with a lock device 26, preferably of a self-locking type. In the preferred embodiment shown in Figure 6, the controlling limiters 16, 17 are identical, except for the attached lock device 26, but mounted with the controlling surfaces facing each other.

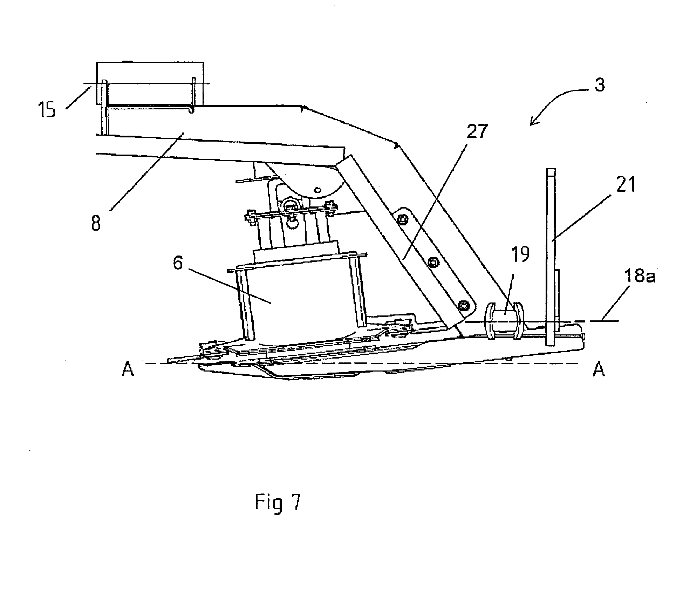

As becomes apparent from Figure 7, the controlling limiters 16 and 17 are mounted in the driving direction behind and above the cutting circle, defining a cutting plane A-A of the cutting members 6. Behind the cutting members 6 but in front of the controlling limiters, there is a shield 27, so that the limiters can be positioned to be visible outside the protection equipment of the mowing units 2 and 3.

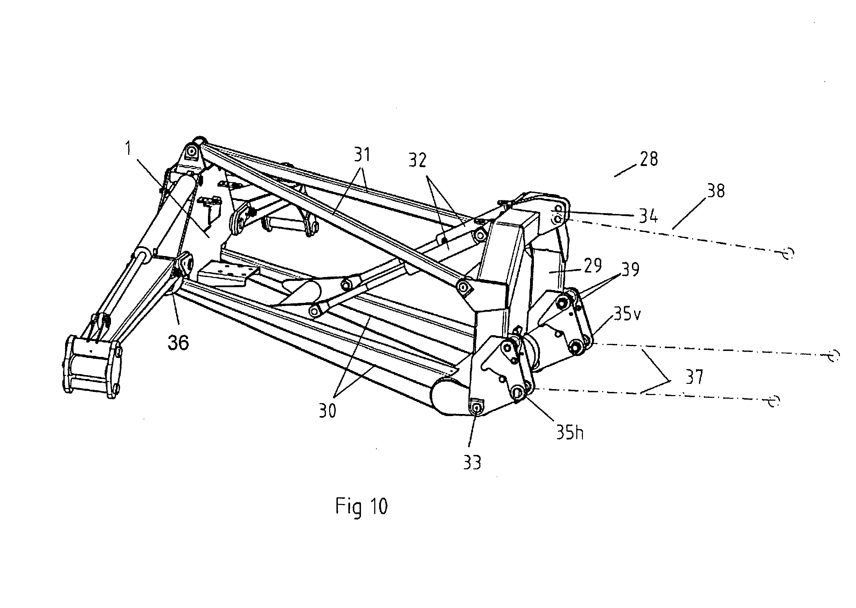

Figure 10 shows, in the working position, a partially sectioned side view of an embodiment of the mower according to the invention with a lifting frame 28 between the load-bearing frame 1 and the tractor or equipment carrier. The lifting frame 28 is formed of a conventional three-point hitch frame 29, lifting arms 30, a track rod 31 and lift cylinders 32. The lift cylinders are preferably connected to a pressure accumulator circuit not shown to achieve springy relief of load between the load-bearing frame 1 and the three-point hitch frame 29. As becomes apparent from the figure, the front swivel points 36 (partially invisible) of the lifting arms are higher than their rear swivel points 33.

Further, Figure 10 shows, at the upper fastening point of the three-point hitch frame, what is called a top link 34, lower left hitch link 35v and lower right hitch link 35h. Lifting arms 37 and top rod 38 of the tractor are indicated by broken lines.

In the preferred embodiment according to Figure 10, it can be seen that the hitch links 35v & 35h are fastened by swivel joints to the three-point hitch frame with the shaft 39, which is positioned in front of the hitch links in the driving direction and higher than these in the vertical direction.

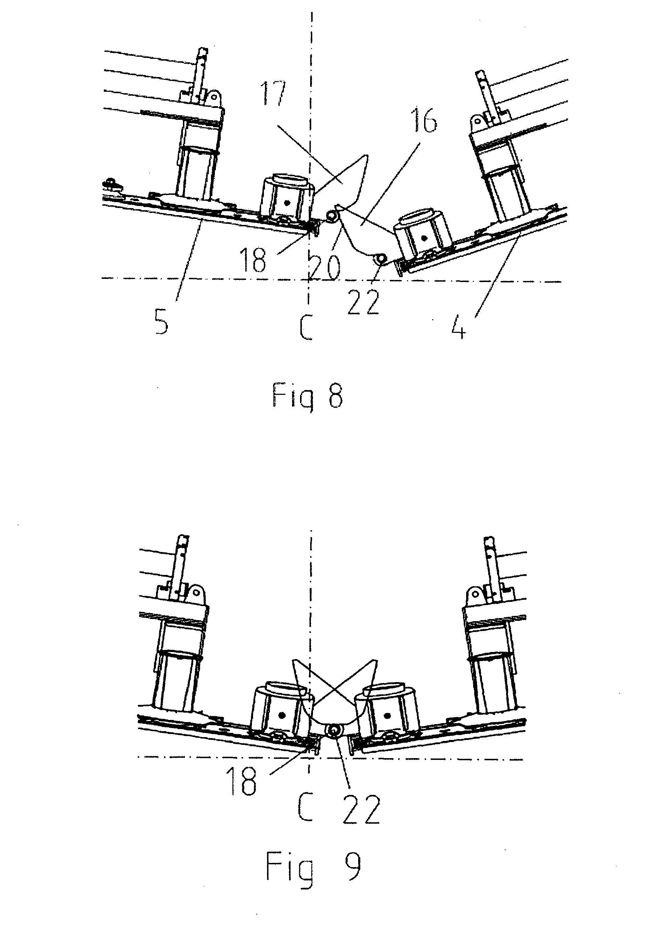

The mower according to the invention operates in the following manner. When the mowing units 2, 3 are turned down in the working position, it is normal that the left and right mowing units do not maintain exactly the same lowering speed. If the inner end of the mowing unit 2 is lower than the inner end of the mowing unit 3, as shown in Figure 8, the swivel shaft 18 of the controlling limiter comes to contact with the curved surface 20 in the opposite limiter. The swivel shaft 18 will then slide along the curved surface 20 and be centred in its concave part 22. Because of the geometric uniformity, the swivel shaft 19 will also be centred in the concave part 23 of the controlling limiter 17. If one of the controlling limiters is further provided with a lock device 26, they will then remain locked against one another but sway freely around the swivel shafts 18, 19 now coinciding in the driving direction until the lock device is released.

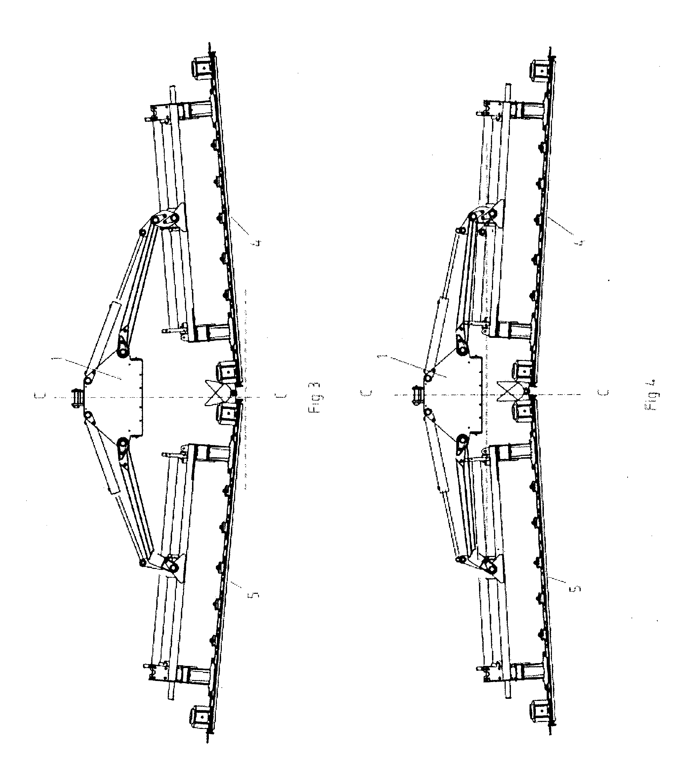

It is now possible for the mowing unit to freely follow the unevenness of the field in the working position, also when the mower is driven along a hollow, see Figure 3, or along a ridge, see Figure 4.

Because the centres of the swivel shafts 18, 19 are positioned above the cutting plane of the cutting members 6, the cutting circles will be distanced from each other when the mowing beams 4, 5 assume a V position, whereby the risk of the knives of the cutting members 6 colliding with the opposite mowing beam or its support structures is eliminated.

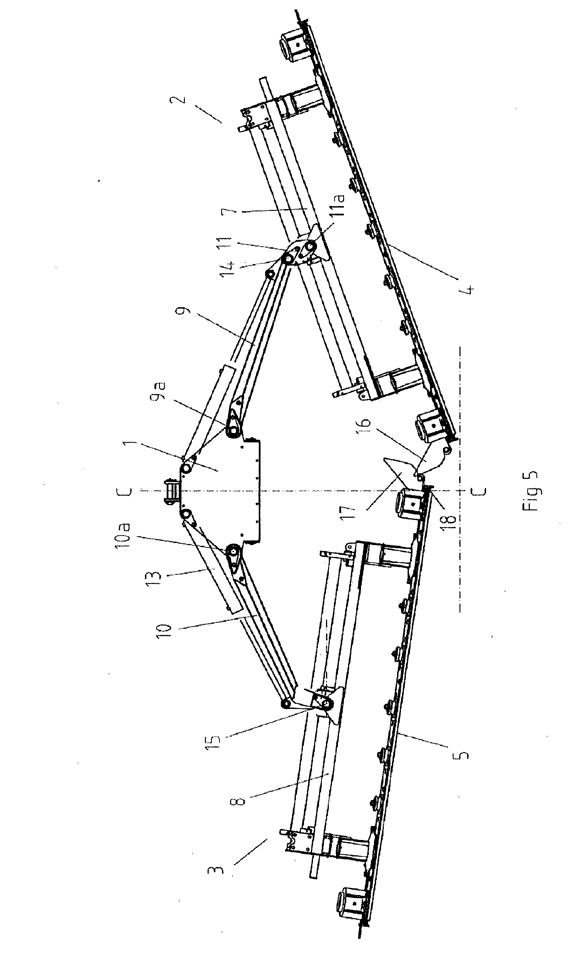

When the headland is reached, the mowing units are lifted up, so that the mowing beams have a ground clearance over the crop not mowed yet as well as over the swaths already mowed. To prevent the mowing beams 4, 5 from then swinging down to the crop or swaths when the tractor or equipment carrier turns round its longitudinal axis due to the cornering or due to unevenness on the ground, it is preferable for the mowing units to assume a V position shown in Figure 5.

When the load-bearing frame 1 is lifted, the inner ends of both lifting booms 9, 10 follow it upwards. At the beginning, their outer ends are kept down by the weight of the mowing units, and they make a swinging movement around the inner swivel points 9a and 10a. The distance between their outer swivel points 14, 15 is reduced afterwards when the swivel points 9a, 10a rise higher than the outer swivel points. Since the mowing units cannot be pulled together due to the distance between the swivel shafts 18, 19 being fixed, the swivel joint 11 is turned round its lower fastening point 11a. The mowing unit's 2 own weight is carried at the swivel point 11 a and generates traction force F₁₁ towards the swivel point 14. The angle between the force vector F₁₁ and the vertical plane is denoted with a. Its horizontal component F_{11 x} (F_{11 x} = G₂ *tan α*, where G₂ = gravitational force caused by the weight of the mowing unit 2) generates an equally great counterforce F _{19 x} in the swivel shafts 18, 19 of the controlling limiters and thus torque around the pivot suspension at the suspension swivels 11a, 15 of the portal frame. Hereby, the mowing units assume an inclined position of equilibrium shown in Figure 5, the outer ends of the mowing beams 4, 5 being higher than the ends directed towards the centre.

This possibility to influence the horizontal force component in the swivel shafts 18, 19 by means of slight inclination of the swivel joint 11 also allows the distribution of surface pressure on the mowing beams 4, 5 to be influenced during mowing.

It is normal that the outer edge of a field is not as even and smooth as the inner parts of the filed. In addition to uneven ground, there are often stones, stubs and the like. A mower according to the present invention allows, during the first round on the field, relief of the surface pressure in the outer part of the mowing beam in a simple manner by positioning the swivel joint 11 in slight inclination inwards by raising the load-bearing frame to some extent in relation to the mowing units. Due to the springy suspension of the lifting booms 9, 10 in the load-bearing frame, the total surface pressure is not affected much but the load on the outer part of the mowing beams is relieved and the part slides more easily over obstacles, which reduces the risk of damages for the cutting members, for the mowing beam and even for the frame structures.

Since they are mounted behind the shield 27 and above the cutting plane A-A of the cutting members, the controlling limiters 16, 17 remain clean from grass ejected out and the like. In the most common attachment cases also visible from the driver's seat of the tractor, which makes it easier to monitor them, particularly at the connection stage.

Since the swivel shafts 18, 19 in the controlling limiters 16, 17 are above the cutting circles of the cutting members 6, the cutting circles will be distanced from the corresponding opposite mowing beam when the mowing units assume a V position like the one shown in Figure 5 and Figure 9, which reduces the risk of the cutting members colliding with the opposite mowing beam or its support structures. Therefore, more extensive overlapping of the cutting circles of the cutting members is allowed, which gives a better cutting result, and also, more extensive adaptability to the ground is achieved when the mower is driven along a hollow, because the mowing beams can be allowed to assume a greater V angle without any risk.

If the lifting frame 28 shown in Figure 10 is connected between the tractor and the load-bearing frame 1, more extensive vertical movement is achieved for the load-bearing frame. The mowing beams 4, 5 can then be lifted still higher over uncut crop or over finished swaths of grass.

If the lift cylinders 32 are connected to a pressure accumulator circuit, relief of load is achieved also between the three-point hitch frame 29 and the load-bearing frame 1, which increases the adaptability of the mowing beams 4, 5 to the ground in very uneven conditions.

If the front swivel points 36 of the lifting arms 30 are mounted higher than the rear swivel points 33 thereof, the advantage is achieved that increased tractive resistance from the mowing beams contributes to pulling up the load-bearing frame 1 and thus contributes to reducing the tractive resistance. Optimizing the difference in height between the front and the rear swivel points 36 and 33, respectively, in relation to the length of the lifting arms 30 results in a certain degree of self-regulation of the relation between the tractive resistance and the surface pressure.

If the hitch links 35h and 35v are fastened by swivel joints to the three-point hitch frame according to Figure 10, the effect of giving way is achieved if the outer part of the mowing units 2 or 3 encounters an obstacle. If the outer part of the mowing unit 3 encounters a fixed obstacle, a torque is generated around the right hitch link 35h. This results in the left hitch link 35v swinging round its swivel point 39 away from the three-point hitch frame, and the left side of the three-point hitch frame is also simultaneously pulled downwards. The whole mower turns then such that the outer part of the right mowing unit 3 swings backwards and upwards to get over the obstacle.

Naturally, the invention is not confined to the above-described preferred embodiment but a plurality of variations thereof are feasible within the scope of the claims below.

Thus, corresponding effects can also be achieved even if the controlling limiters are formed, instead of swivel shafts and concave surfaces, of other types of engaging fastening elements, for instance ball bearings.

Likewise, it is feasible that both lifting booms 9, 10 are fastened by their outer ends to substantially vertical swivel points 11. Further, between the load-bearing frame 1 and the three-point hitch frame 29 of the lifting frame, conventional springy elements of the tension spring or pressure spring type can be mounted to increase the relief of load of the mowing beams 4, 5 via the load-bearing frame 1.

## Claims

1. A mower with a large working width, intended for being connected to the lifting arms in a tractor or a corresponding equipment carrier,
the mower comprising
a load-bearing central frame (1) and, attached to it by swivel joints by means of lifting booms (9, 10) and swivel shafts (9a, 10a, 11 a, 14 and 15) positioned substantially in parallel to the driving direction,
two mowing units (2, 3), each of which is provided with at least one mowing beam (4, 5),
the ends of each mowing unit (2, 3), facing one another in the working position, are provided with controlling limiters (16, 17) adapted to one another,
**characterized in that** said controlling limiters (16, 17)
comprise swivel centres (18a) positioned on a substantially horizontal plane between the cutting plane of the cutting members (6) of the mowing beams (4, 5) and swivel points (11 a, 15) in portal frames (7, 8) of the mowing units (2, 3),
the swivel centres (18a) being arranged to be automatically centred with one another
and thereby being arranged to connect together the ends of the mowing beams facing one another in changing from the transport position to the working position.

2. A mower according to claim 1, **characterized in that** at least between the outer end of one lifting arm (9) and the portal frame (7) of the mowing unit, there is a swivel joint (11) which is substantially vertical in the ordinary working position.

3. A mower according to claims 1 to 2, **characterized in that** each of the controlling limiters (16, 17) comprises a controlling curved surface (20) turned away from the corresponding mowing unit.

4. A mower according to claim 3, **characterized in that** the vertical projections of the controlling surfaces (20, 21) are of at least the same height as the length of the cutting radius of the cutting members (6).

5. A mower according to claim 3, **characterized in that** both controlling curved surfaces (20, 21) comprise a clearly concave limiting area (22, 23).

6. A mower according to claim 1, **characterized in that** the controlling limiters (16, 17) adapted to one another comprise swivel shafts (18, 19) substantially parallel to the driving direction.

7. A mower according to claim 1, **characterized in that** at least one of the controlling limiters (16, 17) adapted to one another comprises a self-locking lock device (26).

8. A mower according to claims 1 to 2, **characterized in that** between the cutting members (6) and the controlling limiters (16, 17), there is a shield (27).

9. A mower according to claims 1, 2 and 8, **characterized in that** the controlling limiters (16, 17) are visibly positioned outside the protecting structures of the mowing units (2, 3).

10. A mower according to claims 1 to 2, **characterized in that** the swivel shafts (9a, 10a, 11a, 14 and 15) between the mowing units (2, 3) and the central frame (1) have such reciprocal positioning that when the central frame is lifted up completely, the mowing beams (4, 5) assume a slightly V-shaped position of equilibrium.

11. A mower according to claims 1 to 2, **characterized in that** the distribution of the surface pressure between the outer and the inner ends of the mowing beams (4, 5) can be controlled by slightly raising or lowering the load-bearing frame (1) in relation to the swivel shafts (11 a, 15) of the mowing units (2, 3).

12. A mower according to any one or any ones of the preceding claims, **characterized in that** the load-bearing frame (1) is connected to a lifting frame (28) by means of lifting arms (30), the front swivel points (32) of which are in the working position higher than the rear swivel points (33) thereof.

13. A mower according to any one or any ones of the preceding claims, **characterized in that** the three-point hitch frame (29) is provided with movable hitch links (35h, 35v) which allow one of the hitch links to be distanced from the three-point hitch frame if the outer part of the opposite mowing unit (2, 3) encounters an obstacle.

14. A mower according to any one or any ones of the preceding claims, **characterized in that** the three-point hitch frame (29) is provided by way of swivel joints with movable hitch links (35h, 35v), the swivel points (39) of which are positioned in front of the hitch links in the driving direction and above the hitch links in the vertical direction.

15. A method for controlling mowing beams of a mower,
which mower is connected to the lifting arms in a tractor or a corresponding equipment carrier, whereby
the mower is provided with a load-bearing central frame (1) to which swivel shafts (9a, 10a, 11a, 14 and 15) are fastened by swivel joints by means of lifting booms (9, 10), and
two mowing units (2, 3) substantially parallel to the driving direction, each of which are provided with at least one mowing beam (4, 5),
the ends of each mowing unit (2, 3), facing one another in the working position, are provided with controlling limiters (16, 17) adapted to one another, whereby
**characterized in that**
swivel centres (18a) for these controlling limiters (16, 17) are arranged on a substantially vertical plane between the cutting plane of the cutting members (6) and swivel points (11a, 15) of the portal frames (7, 8) in such a way that
the swivel centres are automatically centred with one another and connect together the ends of the mowing beams (4, 5) facing each other in changing from the transport position to the working position.

## Patentansprüche

1. Mäher mit einer großen Arbeitsbreite, der vorgesehen ist, mit den Hubarmen in einem Traktor oder einem entsprechenden Einrichtungsträger verbunden zu werden,
aufweisend:
einen lasttragenden zentralen Rahmen (1) und, daran durch Gelenkverbindungen anhand von wesentlich parallel zur Fahrtrichtung positionierten Hebebalken (9, 10) und Gelenkwellen (9a, 10a, 11a, 14 und 15) befestigt,
zwei Mäheinheiten (2, 3), jede von welchen mit zumindest einem Mähbalken (4, 5) versehen ist,
wobei die Enden jeder Mäheinheit (2, 3), die in der Arbeitsstellung einander zugekehrt sind, mit aneinander angepassten steuernden Begrenzern (16, 17) versehen sind,
**dadurch gekennzeichnet, dass** die besagten steuernden Begrenzer (16, 17) Gelenkmitten (18a) aufweisen, die auf einer wesentlich horizontalen Ebene zwischen der Schnittebene der Schneidelemente (6) der Mähbalken (4, 5) und Gelenkpunkten (11a, 15) in Portalrahmen (7, 8) der Mäheinheiten (2, 3) positioniert sind,
welche Gelenkmitten (18a) angeordnet sind, automatisch zueinander zentriert zu werden,
und dabei angeordnet sind, die Enden der einander zugekehrten Mähbalken miteinander zu verbinden, wenn man von der Transportstellung in die Arbeitsstellung umstellt.

2. Mäher nach Patentanspruch 1, **dadurch gekennzeichnet, dass** zumindest zwischen dem äußeren Ende eines Hubarmes (9) und dem Portalrahmen (7) der Mäheinheit eine Gelenkverbindung (11) vorhanden ist, die in der gewöhnlichen Arbeitsstellung wesentlich vertikal ist.

3. Mäher nach Patentansprüchen 1 bis 2, **dadurch gekennzeichnet, dass** jeder der steuernden Begrenzer (16, 17) eine steuernde gekrümmte Fläche (20) aufweist, die der entsprechenden Mäheinheit abgewandt ist.

4. Mäher nach Patentanspruch 3, **dadurch gekennzeichnet, dass** die vertikalen Vorsprünge der steuernden Flächen (20, 21) zumindest gleich hoch wie die Länge des Schneideradius der Schneidelemente (6) sind.

5. Mäher nach Patentanspruch 3, **dadurch gekennzeichnet, dass** die beiden steuernden gekrümmten Flächen (20, 21) einen deutlich konkaven beschränkenden Bereich (22, 23) aufweisen.

6. Mäher nach Patentanspruch 1, **dadurch gekennzeichnet, dass** die aneinander angepassten steuernden Begrenzer (16, 17) zur Fahrtrichtung wesentlich parallele Gelenkwellen (18, 19) aufweisen.

7. Mäher nach Patentanspruch 1, **dadurch gekennzeichnet, dass** zumindest einer der aneinander angepassten steuernden Begrenzer (16, 17) eine selbstschließende Schlossvorrichtung (26) aufweist.

8. Mäher nach Patentansprüchen 1 bis 2, **dadurch gekennzeichnet, dass** zwischen den Schneidelementen (6) und den steuernden Begrenzern (16, 17) ein Schild (27) vorhanden ist.

9. Mäher nach Patentansprüchen 1, 2 und 8, **dadurch gekennzeichnet, dass** die steuernden Begrenzer (16, 17) sichtbar außerhalb der schützenden Strukturen der Mäheinheiten (2, 3) positioniert sind.

10. Mäher nach Patentansprüchen 1 bis 2, **dadurch gekennzeichnet, dass** die Gelenkwellen (9a, 10a, 11a, 14 und 15) zwischen den Mäheinheiten (2, 3) und dem zentralen Rahmen (1) eine derartige gegenseitige Positionierung haben, dass, wenn der zentrale Rahmen völlig nach oben gehoben wird, die Mähbalken (4, 5) eine leicht V-förmige Gleichgewichtslage annehmen.

11. Mäher nach Patentansprüchen 1 bis 2, **dadurch gekennzeichnet, dass** die Verteilung des Flächendrucks zwischen den äußeren und den inneren Enden der Mähbalken (4, 5) gesteuert werden kann, indem der lasttragende Rahmen (1) in Bezug auf die Gelenkwellen (11a, 15) der Mäheinheiten (2, 3) ein wenig gehoben oder gesenkt wird.

12. Mäher nach einem oder mehreren der vorhergehenden Patentansprüche, **dadurch gekennzeichnet, dass** der lasttragende Rahmen (1) mit einem Hubrahmen (28) anhand von Hubarmen (30) verbunden ist, deren vordere Gelenkpunkte (32) sich in der Arbeitsstellung höher als deren hintere Gelenkpunkte (33) befinden.

13. Mäher nach einem oder mehreren der vorhergehenden Patentansprüche, **dadurch gekennzeichnet, dass** der Dreipunkt-Anbaurahmen (29) mit beweglichen Lenkern (35h, 35v) versehen ist, die ermöglichen, dass einer der Lenker von dem Dreipunkt-Anbaurahmen distanziert wird, falls der äußere Teil der gegenüberliegenden Mäheinheit (2, 3) auf ein Hindernis trifft.

14. Mäher nach einem oder mehreren der vorhergehenden Patentansprüche, **dadurch gekennzeichnet, dass** der Dreipunkt-Anbaurahmen (29) über Gelenkverbindungen mit beweglichen Lenkern (35h, 35v) versehen ist, deren Gelenkpunkte (39) in Fahrtrichtung vor den Lenkern und in Vertikalrichtung über den Lenkern positioniert sind.

15. Verfahren zur Steuerung von Mähbalken eines Mähers,
welcher Mäher mit den Hubarmen in einem Traktor oder einem entsprechenden Einrichtungsträger verbunden wird, wobei
der Mäher mit einem lasttragenden zentralen Rahmen (1), an dem Gelenkwellen (9a, 10a, 11a, 14 und 15) durch Gelenkverbindungen anhand von Hebebalken (9, 10) befestigt werden, und
zur Fahrtrichtung wesentlich parallelen zwei Mäheinheiten (2, 3) versehen ist, jede von welchen mit zumindest einem Mähbalken (4, 5) versehen ist,
die Enden jeder Mäheinheit (2, 3), die in der Arbeitsstellung einander zugekehrt sind, mit aneinander angepassten steuernden Begrenzern (16, 17) versehen sind,
**dadurch gekennzeichnet, dass**
Gelenkmitten (18a) für diese steuernden Begrenzer (16, 17) auf einer wesentlich vertikalen Ebene zwischen der Schnittebene der Schneidelemente (6) und Gelenkpunkten (11a, 15) der Portalrahmen (7, 8) derart angeordnet sind, dass
die Gelenkmitten automatisch zueinander zentriert werden und die Enden der einander zugekehrten Mähbalken (4, 5) miteinander verbinden, wenn man von der Transportstellung in die Arbeitsstellung umstellt.

## Revendications

1. Une faucheuse avec une grande largeur de travail, destinée à être reliée aux bras de levage d'un tracteur ou d'un porteur d'équipement correspondant,
la faucheuse comprenant
un châssis porteur central (1) et, fixés à lui par des articulations pivotantes au moyen de flèches de levage (9, 10), et d'arbres d'articulation (9a, 10a, 11a, 14 et 15) positionnés sensiblement parallèlement à la direction d'entraînement,
deux unités de fauchage (2, 3), dont chacun est muni d'au moins une poutre de fauchage (4, 5),
les extrémités de chaque unité de fauchage (2, 3) tournées l'une vers l'autre dans la position de travail sont pourvues de limiteurs de commande (16, 17) adaptés l'un à l'autre,
**caractérisée en ce que** lesdits limiteurs de commande (16, 17) comprennent des centres d'articulation (18a) positionnés sur un plan sensiblement horizontal entre le plan de coupe des organes de coupe (6) des poutres de fauchage (4, 5) et des points d'articulation (11a, 15) au niveau de structures (7, 8) formant des portiques que comprennent les unités de fauchage (2, 3),
les centres d'articulation (18a) étant agencés pour être automatiquement centrés l'un avec l'autre
et étant ainsi agencés de manière à connecter l'une à l'autre les extrémités des poutres de fauchage tournées l'une vers l'autre lors du passage de la position de transport à la position de travail.

2. Une faucheuse selon la revendication 1, **caractérisée en ce qu'**au moins entre l'extrémité extérieure d'un bras de levage (9) et la structure (7) formant portique de l'unité de fauchage, il existe une articulation à rotule (11) qui est sensiblement verticale dans la position de travail ordinaire.

3. Une faucheuse selon les revendications 1 à 2, **caractérisée en ce que** chacun des limiteurs de commande (16, 17) comprend une surface courbe de commande (20) tournée à l'opposé de l'unité de fauchage correspondante.

4. Une faucheuse selon la revendication 3, **caractérisée en ce que** les saillies verticales des surfaces de commande (20, 21) sont d'au moins la même hauteur que la longueur du rayon de coupe des organes de coupe (6).

5. Une faucheuse selon la revendication 3, **caractérisée en ce que** les deux surfaces courbes de commande (20, 21) comprennent une zone de limitation (22, 23) clairement concave.

6. Une faucheuse selon la revendication 1, **caractérisée en ce que** les limiteurs de commande (16, 17) adaptés l'un à l'autre comprennent des arbres d'articulation (18, 19) sensiblement parallèle à la direction d'entraînement.

7. Une faucheuse selon la revendication 1, **caractérisée en ce qu'**au moins un des limiteurs de commande (16, 17) adaptés l'un à l'autre comporte un dispositif de verrouillage (26) autobloquant.

8. Une faucheuse selon les revendications 1 à 2, **caractérisée en ce qu'**entre les organes de coupe (6) et les limiteurs de commande (16, 17), il y a un bouclier (27).

9. Une faucheuse selon les revendications 1, 2 et 8, **caractérisée en ce que** les limiteurs de commande (16, 17) sont positionnés de manière visible à l'extérieur des structures de protection des unités de fauchage (2, 3).

10. Une faucheuse selon les revendications 1 à 2, **caractérisée en ce que** les arbres d'articulation (9a, 10a, 11a, 14 et 15) situés entre les unités de fauchage (2, 3) et le châssis central (1) ont un positionnement réciproque tel que, lorsque le châssis central est soulevé complètement, les poutres de fauchage (4, 5) prennent une position d'équilibre légèrement en forme de V.

11. Une faucheuse selon les revendications 1 à 2, **caractérisée en ce que** la répartition de la pression de surface entre les extrémités intérieures et extérieures des poutres de fauchage (4, 5) peut être commandée en élevant ou en abaissant légèrement le châssis porteur (1) par rapport aux arbres d'articulation (11a, 15) des unités de fauchage (2, 3).

12. Une faucheuse selon l'une quelconque, ou plusieurs, des revendications précédentes, **caractérisée en ce que** le châssis (1) porteur de charge est relié à un châssis de levage (28) au moyen de bras de levage (30), les points d'articulation avant (32) de ceux-ci étant, dans la position de travail, plus élevés que les points d'articulation arrière (33) de ceux-ci.

13. Une faucheuse selon l'une quelconque, ou plusieurs, des revendications précédentes, **caractérisée en ce que** le châssis d'attelage à trois points (29) est équipé de liaisons d'attelage mobiles (35h, 35v) qui permettent à l'une des liaisons d'attelage d'être placée à distance du châssis d'attelage à trois points si la partie extérieure de l'unité de fauchage (2, 3) située en regard rencontre un obstacle.

14. Une faucheuse selon l'une quelconque, ou plusieurs, des revendications précédentes, **caractérisée en ce que** le châssis d'attelage (29) à trois points est équipé, au moyen d'articulations à rotule, de liaisons d'attelage mobiles (35h, 35v) dont les points d'articulation (39) sont positionnés devant les liaisons d'attelage dans la direction d'avancement et au-dessus des liaisons d'attelage dans la direction verticale.

15. Un procédé de commande de poutres de fauchage d'une faucheuse, laquelle faucheuse est reliée aux bras de levage d'un tracteur ou d'un porteur d'équipement correspondant,
la faucheuse étant pourvue d'un châssis porteur central (1) sur lequel des arbres d'articulation (9a, 10a, 11a, 14 et 15) sont montés par des articulations à rotules au moyen de flèches (9, 10) de levage, et
deux unités de fauchage (2, 3) sensiblement parallèles à la direction d'entraînement, chacune d'elle étant munie d'au moins une poutre de fauchage (4, 5),
les extrémités de chaque unité de fauchage (2, 3), tournées l'une vers l'autre dans la position de travail, sont pourvues de limiteurs de commande (16, 17) adaptés l'un à l'autre,
**caractérisé en ce que**
des centres d'articulation (18a) de ces limiteurs de commande (16, 17) sont disposés sur un plan sensiblement vertical entre le plan de coupe des organes de coupe (6) et des points d'articulation (11a, 15) des structures (7, 8) formant portiques, de telle sorte que
les centres d'articulation sont automatiquement centrés l'un par rapport à l'autre et relient l'une à l'autre les extrémités des poutres de fauchage (4, 5) se faisant face l'une à l'autre lors du passage de la position de transport à la position de travail.
